# FASCICULE DE BREVET EUROPEEN

(11) **EP 1 249 059 B1**
(45) Date de publication et mention de la délivrance du brevet: **25.06.2003**
(21) Numéro de dépôt: 01903887.6
(22) Date de dépôt: 08.01.2001
(51) Int. Cl.: H02G 15/013, H02G 3/06

(54) **DISPOSITIF ET PROCEDE DE FIXATION ET DE RETREINT D'UN CABLE MULTIPOLAIRE DANS UN COFFRET ELECTRIQUE**
VORRICHTUNG UND VERFAHREN ZUM FESTHALTEN UND SCHRUMPFEN EINES VIELADRIGEN KABELS IN EINEM ELEKTRISCHEN KASTEN
DEVICE AND METHOD FOR FIXING AND SHRINKING A MULTIPOLE CABLE IN AN ELECTRICAL BOX

(30) Priorité: 18.01.2000 FR 0000606
(43) Date de publication de la demande: 16.10.2002
(73) Titulaire: Manufacture D'Appareillage Electrique de Cahors - MAEC, 46000 Cahors (FR)
(72) Inventeur: VINCENT-FRANCES, Hélène, 46000 Cahors (FR); GAILLARD, Laurent, F-46090 Pradines (FR)
(74) Mandataire: de Roquemaurel, Bruno
(86) Numéro de dépôt international: FR0100046
(87) Numéro de publication internationale: WO01054244

(56) Documents cités:
- EP-A- 0 712 192
- DE-U- 7 516 723
- FR-A- 2 623 344
- US-A- 4 983 784

## Description

La présente invention concerne un dispositif et un procédé de fixation et de rétreint d'une gaine d'étanchéité mécanico-rétractable sur une cheminée d'entrée d'un fil électrique dans un coffret électrique.

L'invention concerne un dispositif et un procédé de fixation sur un coffret électrique des fils électriques unipolaires constituant un câble multipolaire.

Les dispositifs de l'art antérieur utilisés pour fixer un fil électrique dans un coffret électrique sont complexes et nécessitent de ce fait une grande habilité de la part de l'opérateur. Par exemple, le document FR 2 623 344, qui représente l'état de la technique le plus proche, décrit un dispositif de raccordement étanche d'un câble électrique à un coffret comportant une enveloppe rigige entourant l'extrémité du câble et destinée à être remplie d'une résine d'étanchéité.

On connaît par ailleurs des dispositifs utilisant des gaines thermo-rétractables placées à cheval sur le câble et sur la cheminée d'entrée de câble. Dans ce type de dispositif, après introduction du fil dans la cheminée, la gaine est chauffée pour venir enserrer simultanément le fil et la cheminée. Ladite gaine comportant à cet effet un enduit thermo-fusible qui assure l'adhérence de la gaine sur le fil.

Ces dispositifs sont complexes et nécessitent un temps de montage trop long qui dépend de l'habilité de l'opérateur.

Le but de l'invention est de pallier les inconvénients ci-dessus.

A cet effet, le dispositif selon l'invention est caractérisé en ce qu'il comporte un support sur lequel est prévue ladite gaine d'étanchéité, ledit support étant constitué par un premier tube destiné à venir se fixer sur la cheminée d'entrée du fil électrique et un deuxième tube emboîté sur ledit premier tube, un organe de traction étant prévu pour extraire le deuxième tube de la gaine d'étanchéité lorsque le fil est introduit dans le coffret à travers ledit support de telle sorte que la gaine d'étanchéité vienne enserrer ensemble le fil électrique, le premier tube et la cheminée.

Le dispositif selon l'invention permet ainsi de simplifier la pose de la gaine sur la cheminée d'entrée du câble et de réduire le temps nécessaire pour effectuer ce montage.

Préférentiellement, l'organe de traction est constitué par un film souple intercalé entre la surface extérieure du deuxième tube et la surface intérieure de la gaine d'étanchéité et traversant la zone d'emboîtement du deuxième tube sur le premier tube pour ressortir par l'intérieur dudit deuxième tube avec une longueur suffisante de manière à constituer une languette destinée à être tirée pour extraire le deuxième tube de ladite gaine d'étanchéité.

Le procédé selon l'invention est caractérisé en ce que l'on fixe sur la cheminée d'entrée du fil un support sensiblement tubulaire entouré par la gaine d'étanchéité et comportant un premier tube et au moins un deuxième emboîté sur le premier tube, on introduit le câble à travers le support, puis on extrait le deuxième tube de la gaine de telle sorte que celle-ci vienne enserrer ensemble le fil électrique, le premier tube et ladite cheminée.

D'autres caractéristiques et avantages de l'invention ressortiront de la description qui va suivre, prise à titre d'exemple non limitatif, en référence aux figures annexées dans lesquelles:
- la figure 1 illustre schématiquement trois plaques amovibles destinées chacune à recevoir un câble tétrapolaire;
- la figure 2 représente une vue schématique en coupe verticale d'un dispositif selon l'invention ;
- la figure 3 représente une vue partielle d'un dispositif selon l'invention avant son installation sur un coffret électrique ;
- la figure 4 représente schématiquement et partiellement un dispositif selon l'invention fixé sur un coffret électrique.
- la figure 5 illustre un premier mode de réalisation d'un film souple équipant le dispositif de la figure 3 ;
- la figure 6 illustre un deuxième mode de réalisation d'un film souple équipant le dispositif de la figure 4 ;
- la figure 7 représente deux modes de réalisation du deuxième tube faisant partie du dispositif selon l'invention.

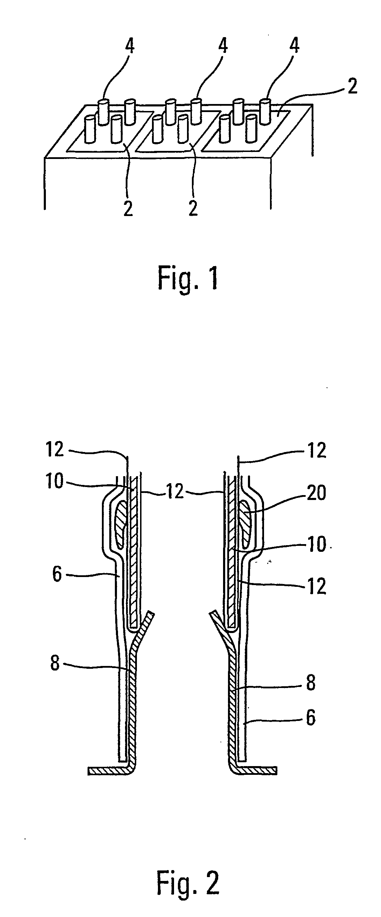

La figure 1 représente trois plaques amovibles 2 comportant chacune quatre cheminées 4 d'entrées de fil conducteur unipolaire à introduire dans le coffret.

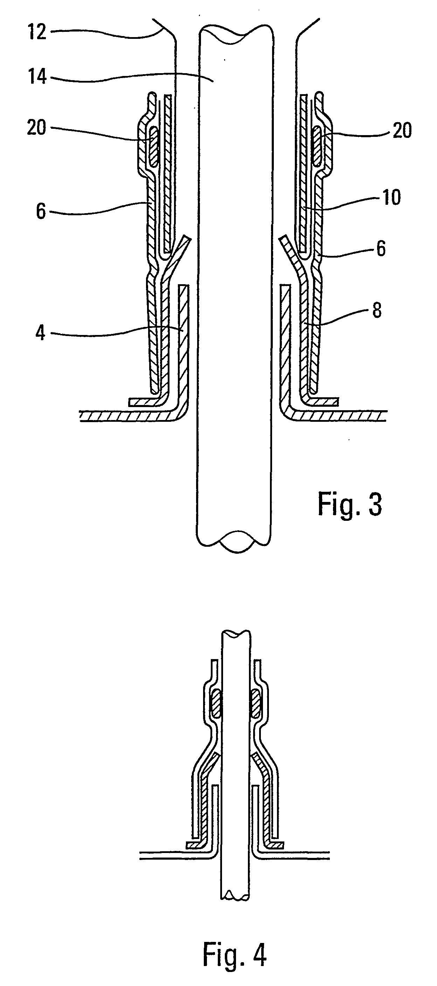

Le dispositif selon l'invention est livré au monteur sous la forme illustrée par la figure 2. Ce dispositif comporte un support sur lequel est enfilée ladite gaine d'étanchéité 6, ledit support étant constitué par un premier tube 8 destiné à venir se fixer sur la cheminée 4 comme cela est illustré par la figure 3. Un deuxième tube 10 est emboîté sur le premier tube 8, et un organe de traction 12 est prévu pour extraire le deuxième tube 10 de la gaine d'étanchéité 6 lorsque le fil électrique 14 est introduit dans le coffret à travers ledit support.

Comme cela est représenté à la figure 4, après extraction du deuxième tube 10, la gaine d'étanchéité 6 vient enserrer ensemble le fil électrique 14, le premier tube 8 et la cheminée 4.

Généralement, lorsqu'aucun fil n'est introduit dans le coffret électrique, la cheminée 4 est obturée. Son ouverture est réalisée par sciage de son extrémité supérieure. Il peut en résulter alors des bavures de sciages qui peuvent endommager la gaine d'étanchéité 6. Aussi, le premier tube 8 qui reste en place autour de la cheminée 4 permet de protéger la gaine d'étanchéité 6 contre toute agression mécanique due à d'éventuelles bavures de sciage.

Selon un mode préféré de réalisation de l'invention, l'organe de traction 12 est constitué par un film souple intercalé entre la surface extérieure du deuxième tube 10 et la surface intérieure de la gaine d'étanchéité 6. Ce film traverse la zone d'emboîtement du deuxième tube 10 sur le premier tube 8 pour ressortir par l'intérieur dudit deuxième tube 10 avec une longueur suffisante de manière à constituer une languette destinée à être tirée pour extraire ce deuxième tube 10 de la gaine d'étanchéité 6. Un anneau d'étanchéité 20 en matériau adhésif est intercalé entre ledit film souple 12 et la surface intérieure de la gaine d'étanchéité 6.

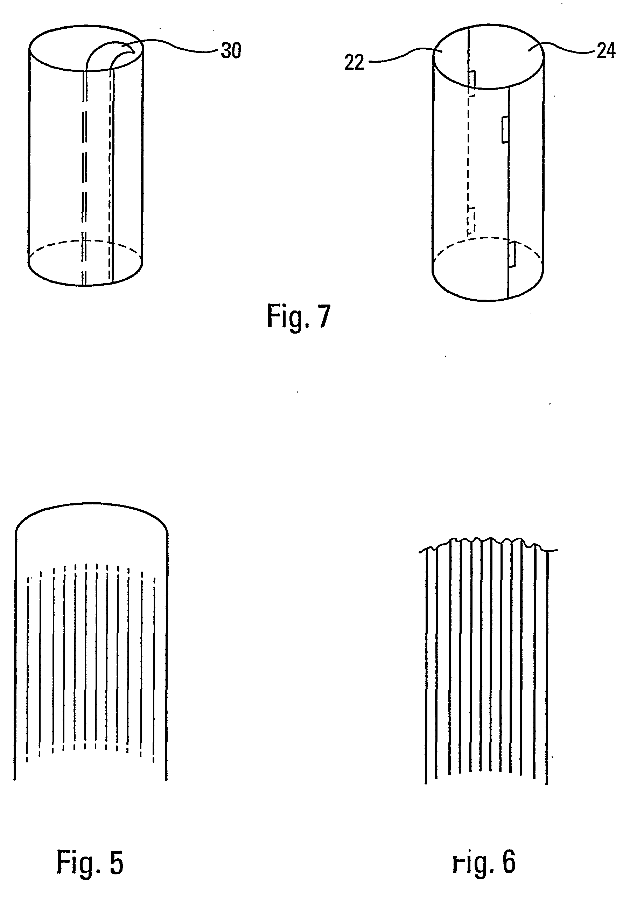

Lors de l'extraction du deuxième tube 10 de la gaine d'étanchéité 6 par traction sur le film souple 12, ce dernier doit, sans bouger relativement à la gaine d'étanchéité 6, glisser à l'intérieur du deuxième tube 10 pendant que celui-ci monte vers l'extérieur de la gaine 6. Le film 12 doit donc glisser sur le bord inférieur du deuxième tube 10 sans faire de plis. Pour cela, la surface du film souple 12 est pliée en accordéon comme cela est illustré par la figure 5.

Dans un autre mode de réalisation illustré par la figure 6, la surface du film peut être découpée en lamelles.

Après extraction du deuxième tube de la gaine d'étanchéité 6, on sépare ce deuxième tube 10 en au moins deux parties de manière à le désolidariser du fil électrique 14.

Pour faciliter cette séparation, le deuxième tube 10 est préférentiellement constitué par deux demi-cylindres 22, 24 associés mécaniquement, par emboîtement par exemple comme cela est illustré par la figure 7.

Dans un autre mode de réalisation, le deuxième tube 10 est fendu par arrachage d'une languette de découpe 30.

## Revendications

1. Dispositif de fixation et de rétreint d'une gaine d'étanchéité (6) mécanico-rétractable sur une cheminée d'entrée (4) d'un fil électrique dans un coffret électrique, **caractérisé en ce qu'**il comporte un support sur lequel est prévue la gaine d'étanchéité (6) ledit support étant constitué par un premier tube (8) destiné à venir se fixer sur ladite cheminée (4) et un deuxième tube (10) emboîté sur le premier tube (8), un organe de traction (12) est prévu pour extraire le deuxième tube (10) de la gaine d'étanchéité (6) lorsque le fil électrique (14) est introduit dans le coffret à travers ledit support de telle sorte que la gaine d'étanchéité (6) vienne enserrer ensemble le fil électrique (14), le premier tube (8) et la cheminée (4).

2. Dispositif selon la revendication 1, **caractérisé en ce que** l'organe de traction (12) est constitué par un film souple intercalé entre la surface extérieure du deuxième tube (10) et la surface intérieure de la gaine d'étanchéité (6) et traversant la zone d'emboîtement du deuxième tube (10) sur le premier tube (8) pour ressortir par l'intérieur dudit deuxième tube (10) avec une longueur suffisante de manière à constituer une languette destinée à être tirée pour retirer le deuxième tube (10) de la gaine d'étanchéité (4).

3. Dispositif selon la revendication 2, **caractérisé en ce qu'**il comporte en outre un anneau d'étanchéité adhésif (20) intercalé entre ledit film souple (12) et la surface intérieure de la gaine d'étanchéité (6).

4. Dispositif selon la revendication 3, **caractérisé en ce que** la surface du film souple (12) est pliée en accordéon.

5. Dispositif selon la revendication 3, **caractérisé en ce que** la surface du film souple (12) est découpée en lamelles.

6. Dispositif selon l'une des revendications 1 à 5, **caractérisé en ce que** le deuxième tube (10) comporte au moins deux demi-cylindres (22, 24) destinés à être séparés après le retrait dudit deuxième tube (10) de la gaine d'étanchéité (6).

7. Procédé de montage d'une gaine d'étanchéité (6) mécanico-rétractable sur une cheminée (4) d'entrée de fil électrique (14) dans un coffret électrique, **caractérisé en ce que** l'on fixe sur la cheminée (4) un support sensiblement tubulaire entouré par la gaine d'étanchéité (6) et comportant un premier tube (8) et au moins un deuxième tube (10) emboîté sur le premier tube (8), on introduit le fil (14) à travers le support, puis on extrait le deuxième tube (10) de la gaine (6) de telle sorte que celle-ci vienne enserrer ledit fil (14), ledit premier tube (8) et la cheminée (4).

8. Procédé selon la revendication 7, **caractérisé en ce qu'** après le retrait du deuxième tube (10), on sépare ce deuxième tube (10) en au moins deux parties, de manière à le désolidariser du câble électrique.

## Patentansprüche

1. Vorrichtung zum Befestigen und Schrumpfen einer mechanisch-rückziehbaren Dichthülle (6) auf einem Stutzen (4) zum Eintritt eines elektrischen Drahts in einen elektrischen Kasten, **dadurch gekennzeichnet, dass** sie einen Träger aufweist, auf welchem die Dichthülle (6) vorgesehen ist, welcher Träger aus einem ersten Rohr (8), das auf dem Stutzen (4) befestigt werden soll, und einem zweiten Rohr (10), das auf das erste Rohr (8) gepasst ist, besteht, wobei ein Zugorgan (12) vorgesehen ist, um das zweite Rohr (10) von der Dichthülle (6) abzuziehen, wenn der elektrische Draht (14) durch den Träger hindurch in den Kasten eingeführt wird, derart, dass die Dichthülle (6) den elektrischen Draht (14), das erste Rohr (8) und den Stutzen (4) miteinander verklemmt.

2. Vorrichtung nach Anspruch 1, **dadurch gekennzeichnet, dass** das Zugorgan (1) durch eine nachgiebige Folie gebildet ist, die zwischen die Außenfläche des zweiten Rohrs (10) und die Innenfläche der Dichthülle (6) geschoben ist und die Fügezone des zweiten Rohrs (10) auf dem ersten Rohr (8) durchläuft, um durch die Innenseite des zweiten Rohrs (10) mit einer ausreichenden Länge auszutreten, um so eine Lasche zu bilden, die gezogen werden soll, um das zweite Rohr (10) von der Dichthülle (4) abzuziehen.

3. Vorrichtung nach Anspruch 2, **dadurch gekennzeichnet, dass** sie außerdem einen haftenden Dichtring (20) aufweist, der zwischen die nachgiebige Folie (12) und die Innenfläche der Dichthülle (6) geschoben ist.

4. Vorrichtung nach Anspruch 3, **dadurch gekennzeichnet, dass** die Oberfläche der nachgiebigen Folie (12) ziehharmonikaartig gefalzt ist.

5. Vorrichtung nach Anspruch 3, **dadurch gekennzeichnet, dass** die Oberfläche der nachgiebigen Folie (12) in Lamellen geschnitten ist.

6. Vorrichtung nach einem der Ansprüche 1 bis 5, **dadurch gekennzeichnet, dass** das zweite Rohr (10) wenigstens zwei Halb-Zylinder (22, 24) umfasst, die nach dem Wegziehen des zweiten Rohrs (10) von der Dichthülle (6) getrennt werden sollen.

7. Verfahren zur Montage einer mechanisch-zurückziehbaren Dichthülle (6) auf einem Stützen (4) zum Eintritt eines elektrischen Drahts (14) in einen elektrischen Kasten, **dadurch gekennzeichnet, dass** man auf dem Stutzen (4) einen im wesentlichen rohrförmigen Träger befestigt, welcher von der Dichthülle (6) umgeben ist und ein erstes Rohr (8) und wenigstens ein auf das erste Rohr (8) gepasstes zweites Rohr (10) umfasst, den Draht (14) durch den Träger hindurch einführt, dann das zweite Rohr (10) von der Hülle (6) abzieht, derart, dass diese den Draht (14), das erste Rohr (8) und den Stutzen (4) verklemmt.

8. Verfahren nach Anspruch 7, **dadurch gekennzeichnet, dass** man nach dem Wegziehen des zweiten Rohrs (10) dieses zweite Rohr (10) in wenigstens zwei Teile trennt, um es von dem elektrischen Kabel zu trennen.

## Claims

1. Device for fixing and shrinking a mechanically shrinkable sealing sleeve (6) onto an input shaft (4) for an electrical wire in an electrical box, **characterized in that** it comprises a support on which the sealing sleeve (6) is provided, the said support being formed by a first tube (8), intended to be fixed onto the said shaft (4), and a second tube (10) fitted over the first tube (8), a pulling member (12) is provided, in order to extract the second tube (10) from the sealing sleeve (6) when the electrical wire (14) is introduced into the box through the said support, in such a way that the sealing sleeve (6) grips the electrical wire (14), the first tube (8) and the shaft (4) together.

2. Device according to Claim 1, **characterized in that** the pulling member (12) is formed by a flexible film inserted between the outer surface of the second tube (10) and the inner surface of the sealing sleeve (6) and passing through the region where the second tube (10) fits over the first tube (8) before re-emerging via the inside of the said second tube (10) with a sufficient length, so as to constitute a tab intended to be pulled in order to remove the second tube (10) from the sealing sleeve (6).

3. Device according to Claim 2, **characterized in that** it furthermore includes an adhesive sealing ring (20) inserted between the said flexible film (12) and the inner surface of the sealing sleeve (6).

4. Device according to Claim 3, **characterized in that** the surface of the flexible film (12) is folded in the manner of a concertina.

5. Device according to Claim 3, **characterized in that** the surface of the flexible film (12) is slit into strips.

6. Device according to one of Claims 1 to 5, **characterized in that** the second tube (10) comprises at least two half-cylinders (22, 24) intended to be separated after the said second tube (10) has been removed from the sealing sleeve (6).

7. Method of mounting a mechanically shrinkable sealing sleeve (6) onto an input shaft (4) for an electrical wire (14) in an electrical box, **characterized in that** a substantially tubular support, surrounded by the sealing sleeve (6) and comprising a first tube (8) and at least a second tube (10) fitted over the first tube (8), is fixed onto the shaft (4), the wire (14) is introduced through the support and then the second tube (10) is extracted from the sleeve (6) in such a way that the latter grips the said wire (14), the said first tube (8) and the shaft (4).

8. Method according to Claim 7, **characterized in that**, after the second tube (10) has been removed, this second tube (10) is separated into at least two parts so as to disconnect it from the electrical cable.
